# EUROPEAN PATENT APPLICATION

(11) **EP 3 845 586 A1**
(43) Date of publication of application: **07.07.2021**
(21) Application number: 20207217.9
(22) Date of filing: 12.11.2020
(51) Int. Cl.: C08K 3/00, C09D 5/00

(54) **ACRYLIC-BASED COATING COMPOSITION, USE THEREOF AS WOOD KNOT BLEEDING SEALER, AND METHOD FOR SEALING WOOD KNOT BLEEDING**

(30) Priority: 15.11.2019 FI 20195973
(71) Applicant: Tikkurila Oyj, 01300 Vantaa (FI)
(72) Inventor: Hätönen, Minna, 04200 Kerava (FI); Seuna, Mirja, 04310 Tuusula (FI)
(74) Representative: Papula Oy

(57) **Abstract**

The present application relates to an aqueous acrylic-based coating composition comprising one or more acrylic (co)polymer(s), and 0.2-1% (w/w) of zirconium compound, and to use thereof as a knot bleeding sealer in wood treatment. The present application also relates to a method for sealing knot bleeding in wood treatment, and to wood obtained with the method.

## Description

### Field of the application

The present application relates to aqueous acrylic-based coating compositions and uses thereof as a knot bleeding sealer in wood treatment, to methods for sealing wood knot bleeding, and to wood obtained with said method.

### Background

Wood contains extractives which may be soluble in water such as tannins, phenols or flavonoids, or soluble in organic solvents, such as resinous material including lipids and terpenoids. Water soluble extractives migrate to the surface of the wood when the humidity varies. Resinous material leaks to the surface when wood gets warmer for example due to sunlight.

Wooden material usually contains imperfections called knots. Knots have an impact to the properties of the wood, and the knot may bleed the extractives, such as resins and other fluids and agents, which is often not desired. Especially in applications where wood is painted, such as indoor panels, ceilings, door frames, furniture, skirting boards and fascia boards, resins present in the timber may continue to bleed through to the surface of a knot for months or even years after manufacture and show as a yellow or brownish stain.

A knot primer paint or solution (knotting), may be applied during preparation but it has been difficult to control the bleeding completely, especially when using mass-produced kiln-dried timber stocks. Therefore there is a need for improved knot sealing agents and coating compositions which may be applied on wood. Especially it is desired to obtain a one-component water-based composition for treating wood.

### Summary

It was found out how to provide efficient coating composition for treating wood, especially knot-containing wood. The present coating composition provides improvements compared to prior art compositions. The coating composition could prevent bleeding of extractives and the like compounds from wood, especially from knots of the wood.

The present application provides an aqueous acrylic-based coating composition comprising
- one or more acrylic (co)polymer(s), and
- 0.2-1 % (w/w) of zirconium compound.

The present application provides use of the aqueous acrylic-based coating composition as a wood bleeding sealer, such as wood knot bleeding sealer.

The present application provides a method for sealing wood bleeding, such as wood knot bleeding, the method comprising
- providing the aqueous acrylic-based coating composition, and
- treating wood with the aqueous acrylic-based coating composition to seal wood, such as wood knots.

The present application provides a method for preventing and/or reducing wood bleeding, such as wood knot bleeding, the method comprising
- providing the aqueous acrylic-based coating composition, and
- treating wood with the aqueous acrylic-based coating composition to seal the wood, such as to seal wood knots.

The present application provides wood, such as wood product or wood-based product, obtained with said method.

The main embodiments are characterized in the independent claims. Various embodiments are disclosed in the dependent claims. The embodiments and examples recited in the claims and in the specification are mutually freely combinable unless otherwise explicitly stated.

The zirconium compound used in the composition together with suitable acrylic binders provides a sealing effect, which can be further enhanced by providing a suitable lamellar engineered inorganic filler, such as perlite or mica. Usually zirconium compounds increase viscosity during storage, but in the present case this phenomenon did not occur. The compositions exhibited appropriate viscosities so that they could be applied by using a variety of equipment, especially onto the whole area of a wooden object and/or in a single treatment step. Not only knots but the whole surface of the wood may be treated and coated. This enables for example industrial scale use, i.e. treatment of large amounts of wood. The storage properties, such as storage viscosity, of the composition based on acrylic (co)polymer as a binder and the zirconium compound, especially in combination with lamellar inorganic binder, were good and the composition remained stable for a prolonged time during the tests.

The knot sealers according to embodiments showed significantly better results in tests compared to commercial products. Testing of knot bleeding property were carried out by using accelerated weathering test (QUV test). Tested versions are under UV light for 1 to 5 days. The longer time it takes to yellowing to occur, the better the product. One of the advantages of the present composition is that they show slower yellowing.

The pH of the composition can be kept at a neutral range. This is a huge benefit specially in industrial applications because the generally used low pH causes corrosion in spray guns and pipes.

The composition can be provided as one-component water-based composition, which makes storing, transporting, providing and using the composition easy and safe.

### Brief description of the figures

Figure 1. Samples treated with knot sealer after 5h of QUV exposure. On the left: Product containing perlite and Zr compound. On the right: Reference 1-component water-based product.
Figure 2. Samples treated with knot sealer after 29h of QUV exposure. On the left: Product containing perlite and Zr compound. On the right: Reference 1-component water-based product.
Figure 3. Samples treated with knot sealer after 72h of QUV exposure. On the left: Product containing perlite and Zr compound. On the right: Reference 1-component water-based product.
Figure 4. Samples treated with knot sealer after 5h of QUV exposure. On the left: Product containing perlite and Zr compound. On the right: Product containing perlite.
Figure 5. Samples treated with knot sealer after 29h of QUV exposure. On the left: Product containing perlite and Zr compound. On the right: Product containing perlite.
Figure 6. Samples treated with knot sealer after 72h of QUV exposure. On the left: Product containing perlite and Zr compound. On the right: Product containing perlite.
Figure 7. Samples treated with knot sealer after 5h of QUV exposure. On the left: Product containing perlite and Zr compound. On the right: Product containing Zr compound.
Figure 8. Samples treated with knot sealer after 29h of QUV exposure. On the left: Product containing perlite and Zr compound. On the right: Product containing Zr compound.
Figure 9. Samples treated with knot sealer after 72h of QUV exposure. On the left: Product containing perlite and Zr compound. On the right: Product containing Zr compound.
Figure 10. Samples treated with knot sealer after 5h of QUV exposure. On the left: Product containing perlite and Zr compound. On the right: Product containing mica and Zr compound.
Figure 11. Samples treated with knot sealer after 29h of QUV exposure. On the left: Product containing perlite and Zr compound. On the right: Product containing mica and Zr compound.
Figure 12. Samples treated with knot sealer after 72h of QUV exposure. On the left: Product containing perlite and Zr compound. On the right: Product containing mica and Zr compound.

### Detailed description

In this specification, percentage values, unless specifically indicated otherwise, are based on weight (w/w) of an ingredient or a substance calculated from the total weight of the aqueous composition. If any numerical ranges are provided, the ranges include also the upper and lower values. The open term "comprise" also includes a closed term "consisting of" as one option.

The present disclosure provides aqueous coating compositions, which contain aqueous solution, such as water, as a solvent and/or as a continuous phase of a dispersion or an emulsion. The composition may be in a form of a dispersion or an emulsion. One or more of the ingredients may be dispersed and/or emulsified in water or in other aqueous solution. The composition may contain at least 40% (w/w) or at least 50% (w/w) of water or the other aqueous solution. In the formulas disclosed herein water may be added or included to obtain 100% (w/w). The compositions may be primer compositions, which may or may not contain pigment(s). The primer composition may be designed to be coated with a pigmented coating or paint composition (top coat). The compositions may be also paint compositions, which contain one or more pigment(s), which may be added at a factory during the manufacturing process. The compositions may be also a tintable composition or tinted composition. A tinted composition is obtained by providing one or more colourant composition(s) to a tintable composition or base paint, for example by using a tinting machine for example at a retail store or at a factory. The composition may or may not contain pigment. The composition may be a base paint containing a pigment to provide a general base colour range, such as white, semi-white, or the base paint may be clear or transparent.

The composition is provided for sealing wood, such as wood in general or knots in the wood. The composition may be called a sealer, a sealant, a blocker, a primer, or a combination thereof. The terms may be used interchangeably. The terms "wood (knot) sealer" or "wood (knot) sealing" as used herein refer to all treatments of wood or wood-based products with the present composition, preferably treatment of untreated, uncoated or unpainted wood, i.e. wood which has not been treated with a coating. The composition may be used in methods for preventing, blocking and/or reducing wood bleeding, especially wood knot bleeding, by sealing the wood or specifically knots in the wood.

Preferably the composition does not contain alkyl phenol ethoxylates (APEO), phthalates, formaldehyde releasers, lead or cadmium, so the composition or the ingredients used for forming the composition is/are preferably APEO free. Also the composition preferably has a low VOC content, which is obtained by using ingredients not including such compounds at all or in very low amounts. The very low VOC content of the compositions of the embodiments improve for example indoor air quality and health and safety of humans and environment.

The coating composition contains one or more acrylic binder(s), which comprise acrylic (co)polymer(s), which may be provided as a water-based dispersion. The acrylic binder(s) may be the only binder(s) in the composition. The dispersion of the acrylic binder(s) may be prepared by emulsion polymerization method from acrylic acid and/or methacrylic acid esters and alkanol. Examples of such components include methyl acrylic, ethyl acrylic, n-butyl acrylic, iso butyl acrylic, t-butyl acrylic, lauryl acrylic and other suitable co-monomers, such as for example styrene, vinyl acetate, vinyl versatate, ethylene, vinyl chloride, vinyl laureate and vinyl ester.

The solid content of acrylic binders can be up to 40% (w/w) of the total aqueous composition. However, in most practical cases the solid content, preferably the solid content of the one or more acrylic (co)polymer(s), may be in the range of 10-40% (w/w), such as 10-35% (w/w), 10-30% (w/w), 15-30% (w/w), 20-30% (w/w) or 20-35% (w/w).

Examples of acrylic binders include acrylate copolymers, acrylate-styrene copolymers, vinyl acetate homopolymers and copolymers, such as vinyl acetate-ethylene, vinyl acetate-ethylene-vinyl chloride terpolymers, vinyl acetate-versatic acid vinyl ester, vinyl acetate-malate, and vinyl acetate-acrylate.

Dispersions of polyacrylic or polymethacrylic can be prepared by methods presented in US2795564 and US2754280. The dispersions of polyacrylic or polymetacrylic may be prepared for example by emulsifying a mixture of (a) one or more monomeric esters of acrylic and/or methacrylic acid and (b) monomeric acrylic, methacrylic and itaconic acid or mixtures of these acids in water and polymerizing the mixture while it is in the emulsified form. It is essential that a non-ionic emulsifying or dispersing agent be used. The monomeric esters of acrylic and methacrylic acids which have proven to be most satisfactory are the alkyl esters in which the alkyl group contains one to eight carbon atoms and which are exemplified by the following: methyl, ethyl, n-propyl, isopropyl, n-butyl, isobutyl, sec-butyl, tert-butyl, isoamyl, tert-amyl, hexyl, heptyl, n-octyl, and 2-ethylhexyl acrylates and methacrylates and isomers of these. From 0.25% to 25% on a molar basis, or preferably from 0.5% to 12%, of the acid is employed. These polymer dispersions have small particle size. An average particle size may be in the range of 0.01-1 µm.

The term "acrylic (co)polymer" includes both acrylic polymers and acrylic copolymers. The acrylic (co)polymer(s) may comprise one or more acrylic polymer(s) and/or one or more acrylic copolymer(s), or a combination of acrylic polymer(s) and copolymer(s). The (co)polymers may be APEO free (co)polymers.

In one example the acrylic polymer and/or copolymer comprises APEO free acrylic polymer and/or copolymer, which have good adhesion on natural wood types, resistance against bleeding, scratch resistance and hardness when formulated as a coating.

The acrylic (co)polymer(s) may be provided as emulsions, preferably aqueous emulsions. In one example the emulsion is alkaline acrylic polymer or copolymer emulsion. It may be anionic, all acrylic polymer or copolymer emulsion, which is stain and bleeding resistant and can be provided in formulations which may or may not be pigmented. The acrylic polymers or copolymers may have an average particle size in the range of 70-100 nm, such as 75-100 nm, for example 73-83 nm or 80-100 nm. In one example an alkaline acrylic copolymer has an average particle size of about 80 nm. The particle size distribution may be relatively narrow or very narrow, such as within 10, 15 or 20 nm range. In one example an acrylic copolymer, which is preferably APEO free, has a particle size of about 90+10 nm.

The composition contains one or more zirconium compounds. The content of the zirconium compound(s) in the composition may be in the range of 0.2-1% (w/w), such as 0.3-0.7% (w/w). In one example the amount of the zirconium compound, such as zirconium hydrogen phosphate, is about 0.5% (w/w).

In one embodiment the zirconium compound is zirconium phosphate. In one embodiment the zirconium compound comprises zirconium hydrogen phosphate. Zirconium phosphates, such as zirconium hydrogen phosphate, are acidic, inorganic cation exchange materials that have a layered structure with formula Zr(HPO₄)₂.nH₂O. It can be also presented with a linear formula Zr(HPO₄)₂. The zirconium hydrogen phosphate may be also called as zirconium phosphate, phosphoric acid zirconium salt, zirconium bis(hydrogen phosphate), zirconium bis(monohydrogen orthophosphate), zirconium bis(monohydrogen phosphate), zirconium hydrogen orthophosphate, or zirconium monohydrogen phosphate. Examples of suitable phases of zirconium phosphate include alpha (Zr(HPO₄)₂·H₂O) phase and gamma (Zr(PO₄)(H₂PO₄)·2H₂O) phase

Zirconium hydrogen phosphate is very water insoluble. In general it has a water solubility of less than 0.1 µg/l at 20°C at pH 7. Therefore it is present in the composition as dispersed in the aqueous solution. In general, when the zirconium compound is water insoluble or poorly water soluble, the zirconium compound may be present as dispersed in the composition. It may be preferred that the zirconium compound is present as crystal, layered and/or lamellar form. The zirconium compound may be present in a water insoluble form or in a poorly water-soluble form, such as a form having a water solubility of less than 1 µg/l at 20°C at pH 7, such as of less than 0.5 µg/l at 20°C at pH 7 or of less than 0.1 µg/l at 20°C at pH 7.

In one embodiment the zirconium hydrogen phosphate is zirconium (IV) hydrogen phosphate (CAS number 13772-29-7). It may be mesoporous, and/or it may provide multifunctional properties. It has a formula Zr(HPO₄) 2·H₂O. The median diameter D₅₀ may be in the range of 1-100 µm, such as 1-10 µm, 20-30 µm or 50-100 µm, for example. The density of the zirconium (IV) hydrogen phosphate may be in the range of 2.3-3.1 g/cm³, such as 2.5-2.9 g/cm³, for example about 2.7 g/cm³ at 20°C. This density may refer to relative density. The apparent density may be in the range of 1.2-2 g/cm³, such as 1.4-1.8 g/cm³, for example about 1.6 g/cm³. Apparent density, which is the bulk density of powder, refers to the mass per unit volume of the particles in a granular material excluding the voids in the material. The bulk density of the zirconium (IV) hydrogen phosphate may be in the range of 0.15-0.21 g/cm³, for example about 0.18 g/cm³. It has a lamellar structure, and in this form it seems to be especially compatible with the lamellar inorganic fillers disclosed herein for knot sealing applications. Lamellar material may also be defined as having an average length:thickness ratio of a particle, which may be also called lamellarity index, of at least 2.8, at least 4, at least 5, at least 10, at least 15, or at least 20, for example about 25, for example in the range of 2.8-100, 4-100, 10-100, 20-100, 20-50 or 10-50. The thickness refers to the shortest dimension of the particle and the length to the longest dimension of the particle.

The use of zirconium compound provided better knot sealing effect compared to prior art sealers, which are based on different compounds, such as zinc compounds. Preferably the present composition does not contain zinc or zinc compounds.

The composition contains one or more inorganic filler(s), which may be also called as mineral filler(s). The content of the inorganic filler may be in the range of 10-20% (w/w), such as in the range of 10-15% (w/w), for example about 13% (w/w). In one example these percentages refer to the specific inorganic fillers described in the following. It was found out that by using specific types of inorganic fillers, preferably having a specific structure, the knot bleeding properties of the composition could be enhanced. Such properties may be provided by using lamellar inorganic filler(s), such as amorphous glass, which may have a lamellar or the like flat, layered and/or plate-like structure, and preferably relatively low bulk density. Without binding to any specific theory, it is believed that such lamellar and/or layered inorganic material may be incorporated with the zirconium compound, especially zirconium phosphate, which has a compatible structure, and therefore an efficient knot bleeding sealing structure is obtained as a synergic effect of these materials, especially when bound by acrylic (co)polymer(s).

Originally the inorganic filler may be present as aggregates, which may have a median diameter of 100 µm or more, 500 µm or more, or 1 mm or more. The median diameter refers to a mean diameter wherein 50% of the particles by weight have a largest diameter less than said diameter. However, the inorganic filler is preferably milled or ground before or during dispersing into the composition to obtain a median diameter D₅₀ of 150 µm or less, 100 µm or less, 50 µm or less, or 20 µm or less, such as 1-150 µm, 10-150 µm, 1-100 µm, 10-100 µm, 1-50 µm or 1-20 µm in the aqueous composition.

In one embodiment the inorganic filler is or comprises lamellar inorganic filler. The lamellar inorganic filler may refer to a mineral of which the structure comprises or substantially consists of a stack of elementary leaves. A lamellar structure may comprise fine, alternating layers of different materials in the form of lamellae. The lamellarity may be characterized by a lamellarity index, which characterizes the shape of the particle, more particularly its flatness (large dimension/thickness). The lamellarity index may be measured by the difference between, the value of the mean dimension of the particles of the powder obtained by a particle size measurement, for example by laser diffraction using a wet method by standard AFNOR NFX11-666, and the value of the mean diameter D50, which may be obtained by measurement of sedimentation, for example by using standard AFNOR X11-683. The lamellarity index, or the average length:thickness ratio, of a lamellar particle, may be at least 2.8, at least 4, at least 5, at least 10, at least 15, or at least 20, for example about 25, for example in the range of 2.8-100, 4-100, 10-100, 20-100, 20-50 or 10-50. The thickness refers to the shortest dimension of the particle and the length to the longest dimension of the particle.

In one embodiment the inorganic filler comprises amorphous glass particles, such as amorphous volcanic glass particles, or consist of amorphous glass particles.

In one embodiment the inorganic filler is or comprises perlite. Perlite is a generic term for naturally occurring siliceous rock, which contains water that expands into steam to produce a foamed structure. Perlite, or volcanic glass, is formed when lava in the form of molten rock spews out of a volcano, and cools in a rapid manner.

During cooling water is trapped within the rock and the lava forms into a glass-like structure.

Perlite is distinguished from other volcanic glasses in that when heated to a suitable point, it expands from four to twenty times its original volume. This expansion is due to the presence of two to six percent water in the crude perlite rock. The rock pops like popcorn creating tiny bubbles which account for the amazing light weight and other exceptional physical properties of expanded perlite. In general expanded perlite may be milled or unmilled. The unmilled expanded perlite may be present as expanded perlite aggregates, which may have a median diameter even up to 2-6 mm. However, the perlite is preferably milled or ground before or during dispersing into the present composition to obtain a median diameter D₅₀ of 150 µm or less, 100 µm or less or 60 µm or less, such as 5-150 µm, 5-100 µm, 5-60 µm or 5-50 µm in the aqueous composition. The expanded perlite has a crystal-like porous and glassy structure, which seems to have an impact to the obtained properties.

In one example the perlite is lamellar engineered perlite, which offers additional resistance against bleeding, improved protective finish and barrier performance for stains and humidity protection. It may also be called expanded perlite. One example of perlite used in the tests has oil absorption of about 70% (w/w), loose weight (bulk density i.e. ratio of weight to volume) of about 340 g/l, and loss of ignition of about 1.1% (w/w). The expanded perlite may have a median particle diameter D₅₀ of 25 µm or less, such as 20 µm or less, or 15 µm or less, such as 5-30 µm. In some examples describing typical particle sizes the diameter at which 10% is less (d10) is 4 µm, the diameter at which 50% is less (d50) is 10 µm, and/or the diameter at which 90% is less (d90) is 26 µm.

The inorganic filler may also be or comprise mica, kaolin and/or talc. The talc may be macrocrystalline talc, which is talc which naturally contains large elementary crystals, such as 15 µm or more, which can be observed on thin lamellars. Microcrystalline talcs in general comprise small size elementary crystals. A pre-ground macrocrystalline talc may have a median diameter D₅₀ of 10 µm or more.

The bulk density of a powder is the ratio of the mass of an untapped powder sample and its volume including the contribution of the interparticulate void volume. Hence, the bulk density depends on both the density of powder particles and the spatial arrangement of particles in the powder bed. The bulk density may be untapped bulk density. In one embodiment the inorganic filler, such as the perlite, has a bulk density in the range of 30-400 g/l (kg/m³ or g/l), such as 30-400 g/l, 50-400 g/l, 200-400 g/l or 300-380 g/l, for example about 340 g/l. Bulk density may be determined by ASTM D6683 - 19.

The inorganic filler may have a specific surface area in the range of 1-3 m²/g, such as in the range of 1.2-2.3 m²/g. The inorganic filler may have a median diameter D₅₀ of 150 µm or less, 100 µm or less or 60 µm or less, such as 5-150 µm, 5-100 µm or 5-60 µm.

Other additives may be used in addition to compounds mentioned above. Such additives may include one or more of water, pH adjusting and/or buffering agent(s), organic solvent(s), rheological additive(s), biocide(s), defoamer(s) and dispersing agent(s).

The composition may be prepared or obtained by combining the acrylic (co)polymer(s), the zirconium compound and optionally the inorganic filler, such as perlite, in the amounts disclosed herein and/or resulting in the amounts in the composition disclosed herein.

The composition may have a pH in the range of 6.5-8.5, such as 7.0-8.0 or 7.5-8.0. The pH of the composition may be adjusted into said range during preparation by using or adding suitable pH adjusting and/or buffering agent(s), and/or suitable ingredient(s).

In one embodiment the composition comprises
- 10-15% (w/w) of acrylic polymer(s),
- 10-15% (w/w) of acrylic copolymer(s),
- 10-20% (w/w) of inorganic filler, and
- 0.2-1.0% (w/w) of zirconium compound.

In one example the composition comprises
- 10-15% (w/w) of acrylic polymer(s),
- 10-15% (w/w) of acrylic copolymer(s),
- 10-20% (w/w) of inorganic filler,
- 0.2-1.0% (w/w) of zirconium compound and
- 10-20% (w/w) of pigment.

In one embodiment the composition comprises
- one or more acrylic (co)polymer(s),
- 0.2-1 % (w/w) of zirconium hydrogen phosphate, such as zirconium (IV) hydrogen phosphate or zirconium bis(hydrogen phosphate), and
- 10-20% (w/w) of lamellar perlite, such as expanded lamellar perlite.

Each of the ingredients mentioned in the compositions as singular may refer to one or more of the same type(s) of ingredient(s), for example acrylic (co)polymer may refer to one or more acrylic (co)polymer(s) or inorganic filler may refer to one or more inorganic filler(s). One or more other additional compounds disclosed herein may be also included.

The coating composition may be a paint composition, and therefore it may contain one or more pigment(s). The composition may be a base paint containing a pigment to provide a general base colour range, such as white, semi-white, or the base paint may be clear. For example a white base paint may contain titanium dioxide as a pigment, and a clear base paint may not contain any pigment at all. The composition may also be a tinted paint, wherein a colourant, such as a universal colourant, has been added to a base paint to obtain a tinted paint having a desired colour or tint, or the colour has been obtained by grinding the pigment in the dispersing phase in paint manufacture. The paint may be an indoor paint.

The amount of the pigment(s) in the composition, if present, may be in the range of 0.5-30% (w/w), such as in the range of 10-20% (w/w). In one example the pigment comprises one or more organic pigment(s), one or more inorganic pigment(s) or a combination thereof. In one example the pigment comprises at least one organic pigment and at least one inorganic pigment. The organic pigment may be selected for example from monoazo pigments, diazo pigments, diazo condensation pigments, anthanthrone pigments, anthraquinone pigments, anthrapyrimidine pigments, quinacridone pigments, quinophthalone pigments, diketopyrrolopyrrole pigments, dioxazine pigments, isoindoline pigments, isoindolinone pigments, isoviolanthrone pigments, metal complex pigments, perinone pigments, perylene pigments, phthalocyanine pigments, pyranthrone pigments, pyrazoloquinazolone pigments, thio indigo pigments, and triarylcarbonium pigments. The inorganic pigment may be selected for example from white pigments, such as titanium dioxide,; black pigments such as iron oxide black, iron manganese black, spinel black, carbon black; chromatic pigments such as chromium oxide, chromium oxide hydrate green; chrome green, cobalt green, ultramarine green, cobalt blue, ultramarine blue, manganese blue, ultramarine violet, cobalt violet, manganese violet, red iron oxide, cerium sulphide, molybdate red, ultramarine red, brown iron oxide, mixed brown, spinel phases and corundum phases, chromium titanium yellow, chrome orange, cerium sulphide, yellow iron oxide, nickel titanium yellow, chrome yellow and bismuth vanadate. Said pigments may be used in compositions used as top coats as well.

The pigment may be ground with other components, such as filler(s), thickener(s), additive(s) and the like, in the dispersing phase of the composition, or the composition (base paint) may be tinted later by adding one or more readily dispersed colourant(s).

In general pigments are granular solids, usually in powdered form, incorporated in the paint to provide colour. On the other hand also fillers are granular solids, usually in powdered form, incorporated in the paint to provide toughness, texture, give the paint special properties, or to reduce the cost of the paint. Fillers may for example serve to support paint structure and to increase the volume of the paint and/or to improve technical properties and influence optical properties.

The coating composition may contain one or more additional inorganic filler(s), in addition to the ones described in previous, which additional inorganic filler(s) may be lamellar and/or non-lamellar. The total amount of the additional inorganic filler(s) may be in the range of 1-20% (w/w), such as 5-10% (w/w). The additional inorganic filler may comprise calcium carbonate, calcium sulphate, such as gypsum and anhydrite, barium sulphate, clay minerals such as talc, mica, kaolin/kaolinite, silicon dioxide (silica), diatomaceous silica, dolomite, synthetic silicate fibers or a combination thereof. Fillers are used to optimize the dispersing phase to give it a suitable consistency. Optimizing the filler package also gives significant savings in the more expensive components like pigments. Clay minerals, in general hydrous aluminium phyllosilicates, may be used because they have a relatively small particle size, which may have an effect to rheological properties, such as viscosity. Talc is a clay mineral comprising hydrated magnesium silicate with the chemical formula H₂Mg₃(SiO₃)₄ or Mg₃Si₄O₁₀(OH)₂. Kaolin may be used in paint especially to extend the titanium dioxide (TiO₂) white pigment and modify gloss levels. In general kaolin refers to rocks that are rich in kaolinite (aluminium silicate dehydrate), which is a clay mineral, with the chemical composition Al₂Si₂O₅(OH)₄. One specific example of kaolin is calcined kaolin, which is raw kaolin that has been fired (in a rotary calcining kiln) high enough to remove the about 12% crystal water, i.e anhydrous aluminium silicate Al₂O₃·2SiO₂. Also other silicates may be used as fillers. Dolomite is an anhydrous carbonate mineral comprising calcium magnesium carbonate, ideally CaMg(CO₃)₂, with rhombohedral shaped crystals. In one example the inorganic filler contains vitreous fibers, such as vitreous silicate fibers.

The composition may further comprise one or more thickener(s). A thickener is used to adjust the overall viscosity of the composition, such as to increase the overall viscosity. The thickener may be inorganic or organic, synthetic or non-synthetic. A thickener may act as a rheology modifier. Rheology modifiers may be classified in two groups: particulate (dispersed) and polymeric (dissolved) types.

Examples of rheology modifiers which may be used in waterborne compositions as thickeners include synthetic thickeners such as cellulose ethers (HEC), polyurethanes (HEUR), alkali thickening acrylic emulsions (HASE) and polyethers, mineral thickeners such as bentonite or attapulgite or natural thickeners such as alginates and xanthane gum. In one embodiment the thickener is an organic thickener, such as a polymeric thickener, for example a synthetic organic thickener. In one embodiment the thickener is a cellulosic thickener, such as hydroxyethyl cellulose. In one embodiment the thickener is hydrophobically modified polyether, such as hydrophobically modified polyacetal polyether (HM-PAPE). In one embodiment the thickener is a nonionic urethane rheology modifier (HEUR). The amount of the thickener in the composition may be in the range of 0.05-2% (w/w), 0.05-1 % (w/w) or 0.05-0.3% (w/w).

Examples of suitable cellulosic thickeners include watersoluble hydroxyethylcellulose (HEC), hydroxypropyl cellulose (HPC) and methylhydroxypropyl cellulose (MHPC), methylhydroxyethyl cellulose (MHEC) and ethylhydroxyethyl cellulose (EHEC) and a hydrophobically modified hydroxyethyl cellulose (HM-HEC). One example of a commercial thickener is Natrosol 250 MR, which is nonionic watersoluble hydroxyethylcellulose (HEC).

The composition may further comprise one or more of other types of rheology modifier(s), such as associative thickener(s), such as nonionic synthetic associative thickener(s) (NSAT), for example hydrophobically modified polyether or polyurethane, or particulate rheology modifier(s). In one embodiment the coating composition comprises one or more of said rheology modifier(s), such as liquid associative polymeric thickener(s), in the range of 0.1-1.5% (w/w), such as 0.1-1.0% (w/w), for example 0.1-0.5% (w/w).

In one example the rheology modifier is a particulate rheology modifier, for example comprising layered silicate(s) or fumed silica. In one embodiment the rheology modifier is an inorganic rheology modifier. In one embodiment the rheology modifier is a particulate inorganic rheology modifier. In one example the rheology modifier is a polymeric rheology modifier, preferably organic polymeric rheology modifier, such as an acrylate or a cellulose ether.

One type of thickener acting as a rheology modifier is associative thickener, which offers properties including improved flow and leveling. The associative thickeners may be identified chemically as styrene-maleic anhydride terpolymers (SMAT), hydrophobically modified alkali-swellable emulsions (HASE), hydrophobically modified polyether thickeners (HMPE), hydrophobically modified cellulose ethers (HMHEC), and hydrophobically modified ethoxylated urethanes (HEUR), also known as PUR (polyurethane) associative thickeners. In one example the coating composition contains a hydrophobically modified ethoxylated urethane (HEUR). One example of a polyurethane thickener is polyether urea polyurethane thickener (PEUPU). In one example the coating composition does not contain a hydrophobically modified alkali-swellable emulsion (HASE).

Liquid rheology additive may be added to generate thixotropic flow behavior in aqueous and highly polar systems to improve the anti-sagging and anti-settling properties. In one example the coating composition comprises one or more nonionic liquid associative polymeric thickener(s), such as one or more polyurethane-based nonionic liquid associative polymeric thickener(s), for example hydrophobically modified polyurethane. In one example the polyurethane-based nonionic liquid associative polymeric thickener is a solution of polyetherurethane.

In one example the composition comprises water soluble hydroxyethylcellulose and nonionic synthetic associative thickener. In one example the composition comprises water soluble hydroxyethylcellulose and polyurethane associative thickener.

In one example the coating composition comprises one or more dispersing and/or wetting agent(s), which may be different agents or a single agent or additive, such as dispersing and wetting agent(s) or additive(s).

A "dispersing and wetting additive" comprises both wetting and dispersing functionalities in one substance or product, such as in one molecule. Such multifunctional additives are amphiphilic compounds, i.e. they are both hydrophilic and lipophilic. Their structure allows them to enable or facilitate dispersion of pigments and fillers in the solvent. The dispersing and wetting additives may be categorized according to the head group as anionic, cationic, amphoteric and nonionic types. A dispersing and wetting additive contains one or more adhesion group(s), which have an effect to the dispersing and wetting effectiveness. Adhesion groups are functional groups which have a special affinity for pigment surfaces.

In the dispersion process the solid particles are first wetted. To lower the surface or interfacial tension of the liquid to enhance the wetting, a wetting functionality is required. A wetting agent in general contains a hydrophobic tail and a hydrophilic head. As the solid particles attract each other, energy is needed to separate the particles from each other in the next step of the dispersion process to prevent flocculation. Dispersing functionality is required to prevent the flocculation and to stabilize the particles by various mechanisms, such as electrostatically or sterically. In one embodiment the colourant composition contains at least two different dispersing and wetting additives.

In one example the composition comprises one or more antifoaming agent(s), which may be also called as defoamer(s). The amount of the antifoaming agent(s) is in the range of 0.1-1.0% (w/w), such as in the range of 0.4-1.0% (w/w), such as 0.6-1.0% (w/w), or 0.7-1-0% (w/w). In one example the antifoaming agent is an emulsion comprising foam-destroying polysiloxanes, hydrophobic solids and emulsifiers; or a mixture comprising foam-destroying polysiloxanes and hydrophobic solids. In one example the antifoaming agent comprises a VOC-free silicon-containing defoamer.

The compositions recited in previous, or other compositions recited in this disclosure, may be combined, and the compositions may contain other additional substances disclosed herein. In general the compositions disclosed herein, and the combinations thereof, may contain further additives customary of coating compositions, for example in an amount in the range of 0-20% (w/w), or 1-20% (w/w), 1-10% (w/w), 1-7% (w/w), 1-5% (w/w), or 0.5-3.0% (w/w), so that he sum of the percentages of the substances makes 100% (w/w). A substance may refer to an agent or an additive, or a combination of such agents and/or additives.

The present application also provides a method for preparing aqueous coating composition, the method comprising adding the ingredients to form the composition, optionally by using a dispersing process, optionally including adjusting the pH, or including any further optional feature disclosed herein. The obtained coating composition may be tinted by adding one or more colourant composition(s).

The wood to be treated may be any suitable wood, which contains knots or the like structures which are prone to bleed. The wood may be processed wood, such as sawn and/or planed wood, which may be called a wood product or a wood-based product. The wood may be mass-produced, and the present compositions are suitable for industrial use for treating large amounts of wood effectively in short time. Especially the present compositions are useful for treating dried wood, such as kiln-dried wood, which has a dry content of 20% (w/w) or less, such as 10-20%,for example 10-15% for indoor use or 15-18% for outdoor use, however depending on weather and/or local conditions. In one example the wood comprises mass-produced kiln-dried timber stock. Examples of suitable targets to be treated include applications where wood is to be painted, such as indoor panels, ceilings, door frames, furniture, claddings, skirting boards and fascia boards.

The treated wood products or wood-based products, or wood products or wood based products to be treated with the composition, may be used for interior and exterior applications. Suitable application methods include spraying, brushing, rolling with rollers, vacuum application, curtain coating and dipping, and corresponding equipment include spraying means, such as a spray gun, a roller, a brush, vacuum application means, curtain coater and dipping means. The treatment may be carried out with a method for preventing and/or sealing bleeding, such as knot bleeding, preferably in or during wood treatment, the method comprising providing the aqueous acrylic-based coating composition, and treating wood with the aqueous acrylic-based coating composition to seal bleeding, such as to seal knots or any other part(s) susceptible to bleeding, in the wood. The wood may be treated by spraying, by using roller(s) or by brushing. The aqueous acrylic-based coating composition is allowed to dry and/or cure on the wood, preferably for a time period sufficient to obtain a dried and/or cured coating.

The present application also provides wood, including wood product and wood-based product obtained with the treatment method and/or coated or treated with the composition disclosed herein. The term "wood" herein may include wood products, and "wood product" may include wood-based products. The wood preferably contains the composition disclosed herein as a dried and/or cured coating, such as on at least one side and/or surface of the wood, wood product or wood-based product.

### Examples

### Example 1: Preparation of knot bleeding sealer

0.98 kilograms of water was mixed with coalescent and dispersing agents and defoamer was added to this mill base and mixed. pH was adjusted. 1.26 kilograms of perlite and 0.05 kilograms of Zr compound (zirconium bis(hydrogen phosphate) (CAS:13772-29-7)) were added and mixed. Rheological additives were added to this mill base. Mill base was dispersed for 15 minutes. After that 6.4 kilograms of acrylic dispersions (aqueous APEO free acrylic copolymer and aqueous alkaline acrylic copolymer emulsion) were added to mill base. Finally, a small amount of water and defoamer were added. Final mixing time was 15 minutes.

The zirconium hydrogen phosphate had a specific surface area 2334 m²/kg (test result of a batch), molecular weight of 301.19 g/mol, and a formula α-Zr(HPO₄)2H₂O.

### Example 2: Knot sealer tests

Knot bleeding tests were carried out using QUV device (Accelerated Weather Testing by Q-LAB Corporation, USA). The tests are based on standard prEN927-7. However instead of xenon suggested by the standard, the QUV testing is carried out by using more effective UV lamp to obtain test results in shorter time.

Tests showed that knot bleeding sealer versions show less yellowing compared to versions that do not contain the combination of acrylic binders, perlite and zirconium compound. However, every knot has different properties and therefore results show some diversity. To minimize diversity of the test results, pieces of wood were split in half before surface treatment, so that a similar knot pattern is formed on each compared pair of sealer test surfaces. But as a conclusion, it can be said that the resistance to knot bleeding is improved with perlite and Zr compound when using acrylic binder.

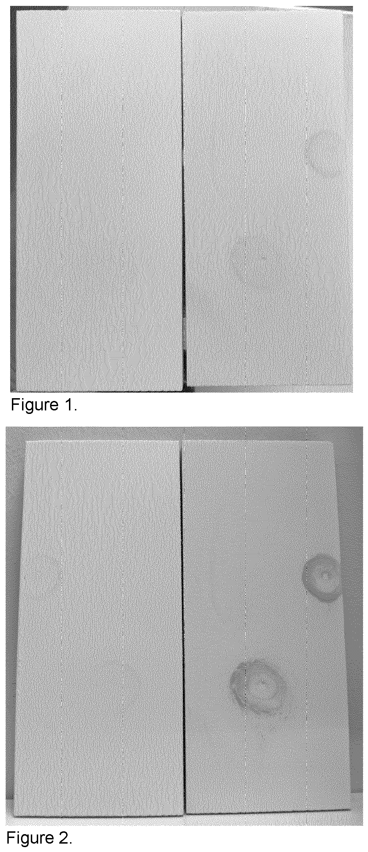

Figure 1. After 5h of QUV exposure. On the left: Product containing perlite and Zr compound. On the right: Reference 1-component water-based product.

Figure 2. After 29h of QUV exposure. On the left: Product containing perlite and Zr compound. On the right: Reference 1-component water-based product.

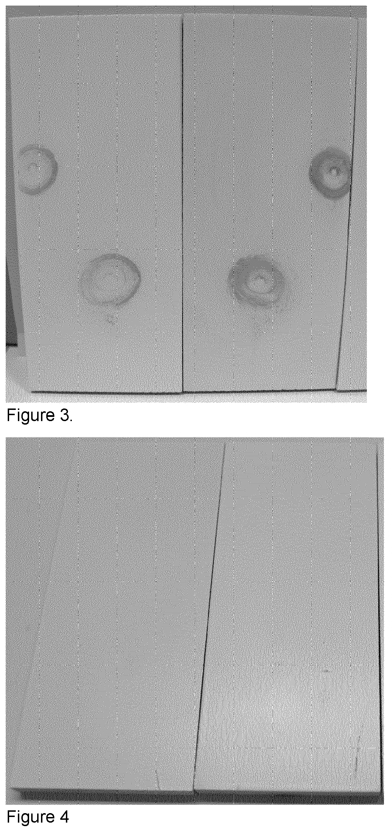

Figure 3. After 72h of QUV exposure. On the left: Product containing perlite and Zr compound. On the right: Reference 1-component water-based product.

Figure 4. After 5h of QUV exposure. On the left: Product containing perlite and Zr compound. On the right: Product containing perlite.

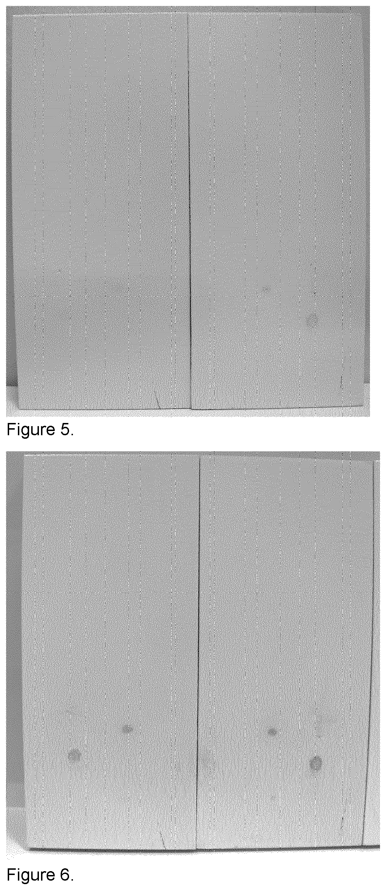

Figure 5. After 29h of QUV exposure. On the left: Product containing perlite and Zr compound. On the right: Product containing perlite.

Figure 6. After 72h of QUV exposure. On the left: Product containing perlite and Zr compound. On the right: Product containing perlite.

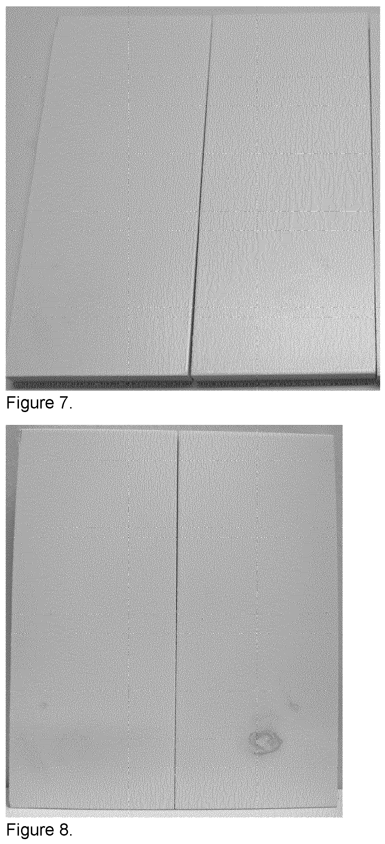

Figure 7. After 5h of QUV exposure. On the left: Product containing perlite and Zr compound. On the right: Product containing Zr compound.

Figure 8. After 29h of QUV exposure. On the left: Product containing perlite and Zr compound. On the right: Product containing Zr compound.

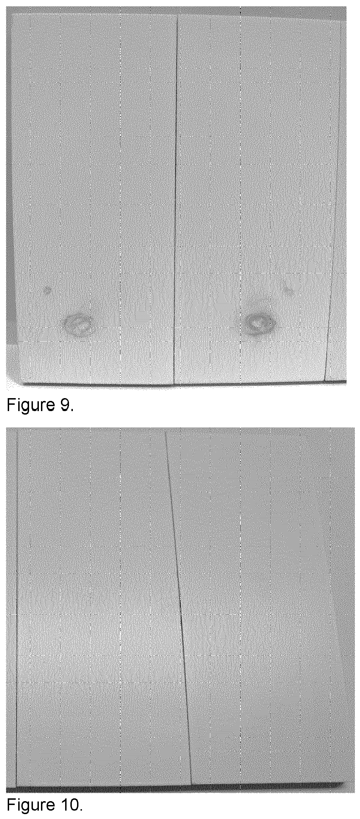

Figure 9. After 72h of QUV exposure. On the left: Product containing perlite and Zr compound. On the right: Product containing Zr compound.

Figure 10. After 5h of QUV exposure. On the left: Product containing perlite and Zr compound. On the right: Product containing mica and Zr compound.

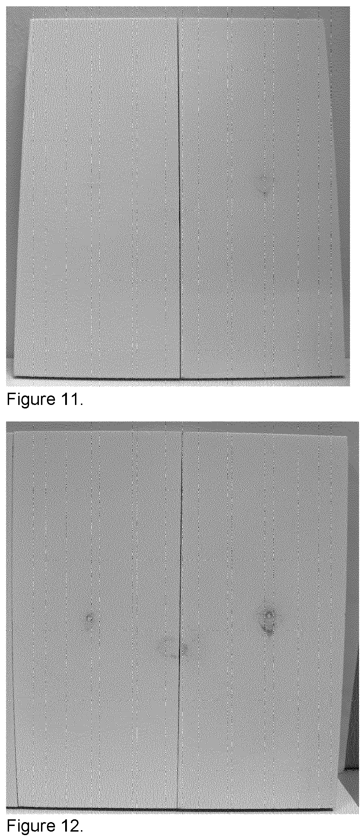

Figure 11. After 29h of QUV exposure. On the left: Product containing perlite and Zr compound. On the right: Product containing mica and Zr compound.

Figure 12. After 72h of QUV exposure. On the left: Product containing perlite and Zr compound. On the right: Product containing mica and Zr compound.

The colour db* and dE* values were measured after 72 hours of QUV exposure compared to unexposed samples in CIELAB colour coordinates with an apparatus as specified in EN ISO 11664-4. The results are shown in Table 1.

The color difference values db* and dE* in Table 1 were measured after 72 hours of QUV exposure compared to unexposed samples in CIELAB colour coordinates with an apparatus as specified in EN ISO 11664-4. The results are shown in Table 1.

Delta L* (dL*), delta a* (da*), and delta b* (db*) values provide a complete numerical descriptor of the color differences between a sample and a standard color.
dL* represents a lightness difference between sample and standard colors.
da* represents a redness or greenness difference between sample and standard colors.
db* represents blueness-yellowness difference between sample and standard colors.
In the case of dL* da* db* the higher the value, the greater the difference in that dimension.
Delta E* (dE* Total Color Difference) is calculated based on delta L* a* b* color differences.

**Table 1**

| | db* after 72h | dE* after 72h |
|---|---|---|
| Perlite + Zr compound (Figure 3. On the left) | 11,39 | 12,79 |
| Reference WB 1K lacquer (Figure 3. On the right) | 21,98 | 24,09 |
| | | |
| Perlite + Zr compound (Figure 6. On the left) | 10,48 | 11,48 |
| Perlite (Figure 6. On the right) | 17,19 | 19,4 |
| | | |
| Perlite + Zr compound (Figure 9. On the left) | 11,94 | 13,37 |
| Zr compound (Figure 9. On the right) | 21,34 | 23,78 |
| | | |
| Perlite + Zr compound (Figure 12. On the left) | 3,70 | 4,39 |
| Mica + Zr compound (Figure 12. On the right) | 10,36 | 11,54 |

It was found out that by using specifically acrylic (co)polymers as binders the surface of the coating was smoother and had a better quality compared to other type of binders. A good levelling was obtained and if the coated wood was further treated with a separate top coat, also the quality of the top coat surface was ensured. The coating was stable and did not deteriorate over time.

### Example 3: Storage stability

The storage stability of the composition was tested. Viscosity of the composition during storage was measured with a Krebs-Stormer type viscometer using a test method based on standard ASTM D 562-10 (2014). This method is a standard test method for consistency of paints measuring Krebs unit (KU) viscosity using a Stormer-type viscometer. It is suitable for measuring viscosity in Krebs units when determining the consistency of paints and corresponding coatings. The instrument manufacturers' instructions for use were followed. The results are shown in Table 2. It can be seen that the storage viscosity remained constant for a prolonged time.

**Table 2**

| Time | KU (Krebs Units) |
|---|---|
| start | 118 |
| 1 day. | 118 |
| 1 week | 119 |
| 5 months | 122 |
| 6 months | 122 |

## Claims

1. An aqueous acrylic-based coating composition comprising
- one or more acrylic (co)polymer(s), **characterized by** comprising
- lamellar inorganic filler and
- 0.2-1% (w/w) of zirconium compound comprising zirconium phosphate.

2. The aqueous acrylic-based coating composition of claim 1, wherein the zirconium phosphate comprises zirconium hydrogen phosphate.

3. The aqueous acrylic-based coating composition of claim 1 or 2, wherein the zirconium compound is present in a water-insoluble form or in a poorly water-soluble form having a water solubility of less than 1 µg/l at 20°C at pH 7, such as less than 0.1 µg/l at 20°C at pH 7.

4. The aqueous acrylic-based coating composition of any of the preceding claims, comprising inorganic filler in the range of 10-20% (w/w).

5. The aqueous acrylic-based coating composition of claim 4, wherein the inorganic filler comprises amorphous glass particles, such as amorphous volcanic glass particles.

6. The aqueous acrylic-based coating composition of any of the claims 4-5, wherein the inorganic filler comprises perlite, such as expanded perlite.

7. The aqueous acrylic-based coating composition of any of the claims 4-6, wherein the inorganic filler comprises mica, kaolin and/or talc.

8. The aqueous acrylic-based coating composition of any of the claims 4-7, wherein the inorganic filler has a bulk density in the range of 30-400 g/l.

9. The aqueous acrylic-based coating composition of any of the preceding claims, wherein the composition has a pH in the range of 6.5-8.5, such as 7.0-8.0.

10. The aqueous acrylic-based coating composition of any of the preceding claims, wherein the content of the one or more acrylic (co)polymer(s) is in the range of 10-40% (w/w), such as 10-30% (w/w).

11. The aqueous acrylic-based coating composition of any of the preceding claims comprising
- 10-15% (w/w) of acrylic polymer(s),
- 10-15% (w/w) of acrylic copolymer(s),
- 10-20% (w/w) of inorganic filler, and
- 0.2-1.0% (w/w) of zirconium compound.

12. The aqueous acrylic-based coating composition of any of the preceding claims comprising
- one or more acrylic (co)polymer(s),
- 0.2-1 % (w/w) of zirconium hydrogen phosphate, and
- 10-20% (w/w) of lamellar perlite.

13. Use of the aqueous acrylic-based coating composition of any of the preceding claims as a wood bleeding sealer, such as wood knot bleeding sealer.

14. A method for sealing wood bleeding, such as wood knot bleeding, the method **characterized by** comprising
- providing the aqueous acrylic-based coating composition of any of the claims 1-12, and
- treating wood with the aqueous acrylic-based coating composition to seal the wood, such as to seal wood knots.

15. Wood obtained with the method of claim 14.
